# EUROPÄISCHE PATENTSCHRIFT

(11) **EP 2 850 397 B1**
(45) Veröffentlichungstag und Bekanntmachung des Hinweises auf die Patenterteilung: **12.06.2019**
(21) Anmeldenummer: 13723404.3
(22) Anmeldetag: 25.04.2013
(51) Int. Cl.: G01F 1/075, G01P 3/481, G01P 3/488, G01F 1/115, G01F 15/14

(54) **BATTERIELOSER ZÄHLER FÜR STRÖMENDE MEDIEN**
BATTERY-FREE METER FOR FLOWING MEDIA
COMPTEUR SANS BATTERIE POUR MILIEUX EN ÉCOULEMENT

(30) Priorität: 19.05.2012 DE 102012009962
(43) Veröffentlichungstag der Anmeldung: 25.03.2015
(73) Patentinhaber: Hengstler GmbH, 78554 Aldingen (DE)
(72) Erfinder: EFIMOV, George, 78628 Rottweil (DE); MIXNER, Michael, 78504 Villingen Schwenningen (DE)
(74) Vertreter: Riebling, Peter
(86) Internationale Anmeldenummer: PCT/EP2013/001249
(87) Internationale Veröffentlichungsnummer: WO 2013/174469

(56) Entgegenhaltungen:
- EP-A2- 2 159 547
- WO-A1-02/01166
- DE-A1- 3 538 514
- DE-A1- 19 714 351
- DE-A1-102007 039 050
- GB-A- 2 102 129
- US-A- 3 731 533

## Beschreibung

Gegenstand der Erfindung ist ein batterieloser Zähler für strömende Medien nach dem Oberbegriff des Patentanspruches 1.

Mit dem Gegenstand der US 6,612,188 B2 ist ein batterieloser Zähler für strömende Medien bekannt geworden, bei dem im strömenden Medium die mit Permanentmagneten besetzte, durch das Medium drehend angetriebene Scheibe angeordnet ist. Der zur Erzeugung elektrischer Energie notwendige Wiegand-Sensor ist außerhalb des strömenden Mediums im Umgebungsbereich des Zählers angeordnet.

Nachteil dieser Anordnung ist, dass lediglich ein einziger Wiegand-Sensor vorgesehen ist. Der Aufbau eines redundanten Systems mit zwei unabhängig voneinander arbeitenden Wiegand-Sensoren ist damit nicht möglich.

Der Begriff "Wiegand-Sensor" ist im Übrigen synonym mit dem Begriff "Impulsdraht-Bewegungssensor". Der Einfachheit wegen wird in der folgenden Beschreibung lediglich der erst genannte Begriff verwendet.

Beim Gegenstand der US 6,612,188 B2 ist eine Anordnung von zwei voneinander beabstandet angeordneten Wiegand-Sensoren nicht möglich, weil das Permanentmagnetfeld zu schwach wäre, beide Wiegand-Sensoren zu durchsetzen.

Mit dem Gegenstand der EP 0 724 712 B1 ist ein weiterer Drehwinkelsensor mit batterielosem Betrieb bekannt, bei dem drei Wiegand-Sensoren vorgesehen sind, die im Permanentmagnetfeld einer drehenden Scheibe angeordnet sind. Nachteil dieser Anordnung ist allerdings, dass eine solche Messanordnung nicht für Gas- oder Wasserzähler geeignet ist, weil eine Trennung zwischen dem strömenden Medium und der Permanentmagnetscheibe einerseits und den Wiegand-Sensoren andererseits nicht vorgesehen ist.

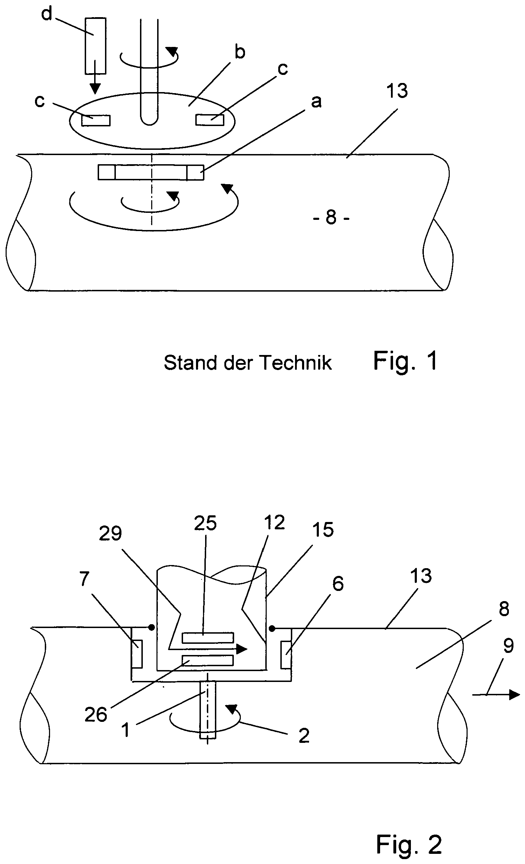

In der Figur 1 ist als Stand der Technik ein Drehwinkelsensor dargestellt, bei dem eine mit Permanentmagneten besetzte Scheibe durch den Fluidstrom drehbar angetrieben ist. Die magnetischen Feldlinien treten durch die Medien-Trennwand hindurch und treiben einen zweiten Magneten an, der von dem ersten sich drehenden Magnetfeld über eine magnetische Kopplung mitgenommen wird, um so durch die Abtastung des zweiten, außerhalb des Mediums befindlichen drehenden Magneten einen Wiegand-Sensor in diesem Bereich zu beaufschlagen. Damit wird eine batterielose Versorgung der Schaltung ermöglicht.

Nachteil des bekannten Anwendungsprinzips ist die magnetische Kopplung, die mit einem hohen Aufwand verbunden ist und von außen sehr einfach durch Fremdmagnetfelder beeinflussbar ist, was jedoch im Gas- oder im Wasserzählerbau unerwünscht ist.

Weiterer Nachteil beim Stand der Technik nach Figur 1 ist, dass bewegliche Teile im Außenbereich angeordnet sind, was unerwünscht ist.

Mit der DE 35 38 514 A1 1 ist ein batterieloser Zähler für strömende Medien offenbart, bei dem in der das strömende Medium führenden Rohrleitung ein mit Permanentmagneten besetzter, durch das Medium drehend angetriebener Rotorkörper angeordnet ist und das hierdurch erzeugte, rotierende Magnetfeld auf einen Wiegand-Sensor einwirkt, der außerhalb des strömenden Mediums im Umgebungsbereich des Zählers angeordnet ist, wobei quer zur Längsachse der Rohrleitung in diese Rohrleitung ein Gehäuseteil abdichtend in den Innenraum der Rohrleitung eingreift und vom strömenden Medium umströmt ist, dass der Außenumfang des Gehäuseteils von dem drehend angetriebenen, das rotierende Magnetfeld erzeugende Rotorteil umfasst ist, und dass im Gehäuseteil ein Wiegand-Sensor angeordnet ist.

Nachteil bei diesem Stand der Technik ist, dass lediglich ein Wiegand-Sensor für die Durchflussmessung verwendet wird. Bei Ausfall des einen Wiegand-Sensors müsste man die Messapparatur auseinanderbauen um den Komplettausfall des Messsystems zu reparieren. Außerdem ist die der hier gezeigte Zähler nur für die Erzeugung von einem Magnetfeld geeignet um die magnetischen Impulse des lediglich ein Wiegand-Sensor zu erzeugen.

Der Erfindung liegt deshalb die Aufgabe zugrunde, einen batterielosen Zähler für strömende Medien, insbesondere Gas oder Wasser, so weiterzubilden, dass außerhalb des strömenden Mediums keine drehbaren Teile angeordnet sind und eine von außen aufgebrachte magnetische Beeinflussung nicht zu einer Beeinträchtigung der Zählfunktion führt. Ferner soll der Zähler eine hohe Zuverlässigkeit aufweisen.

Zur Lösung der gestellten Aufgabe ist die Erfindung durch die technische Lehre des Anspruches 1 gekennzeichnet.

Die grundlegende Funktion der Erfindung ist, dass ein strömendes Medium eine Mechanik antreibt, welche eine Bewegung (vorzugsweise Rotationsbewegung) erzeugt. Diese (Rotations-) Bewegung wird dazu genutzt, ein Magnetfeld bzw. die Magnetfeldrichtung zu ändern. Entweder sind Magnete mit dem Bewegungselement verbunden oder die Sensorik bewegt sich bei feststehenden Magneten.

Die Wiegand-Sensoren detektieren diese Magnetfeldrichtungsänderungen und erzeugen bei jeder Änderung einen Stromimpuls. Dieser Stromimpuls wird von einer Schaltung detektiert und gezählt. Der aktuelle Zählstand wird in der Schaltung gespeichert und kann später durch externe Auslesegeräte abgelesen und weiterverarbeitet werden (z. B. per Funk gesendet oder im klassischen Display angezeigt werden).

Die Stromimpulse der Wiegand-Sensoren reichen als Stromversorgung der Schaltung für diese Vorgänge aus; die Schaltung kommt daher ohne externe Stromversorgung aus. Die Magnetfeldauslegung ist für einen optimalen Einsatz festgelegt (Arbeitstemperatur, Feldstärke, Feldhomogenität usw.).

Zusätzlich zu der Stromversorgung der Schaltung können mit der erzeugten Wiegand Energie weitere Sensorelemente betrieben werden. Mit diesen weiteren Sensorelementen (z. B. Hallsensor) ist zusätzlich die Erfassung der Drehrichtung möglich. Je nach Drehrichtung wird der bei jedem Impuls in der Schaltung gespeicherte Zählstand um einen positiven oder negativen Zählschritt verändert.

Voraussetzung für die Herstellung eines redundanten Systems und Detektieren des Ausfalls, dass mindestens zwei Wiegand-Sensoren angeordnet sind, die von dem gleichen Magnetfeld durchströmt sind.

Durch ein Vervielfachen der Systeme kann eine Sicherheitsüberwachung realisiert werden. Dies kann z. B. durch Vergleichen der Zählstände redundanter Systeme mit mindestens zwei voneinander unabhängig arbeitenden Wiegand-Sensoren erfolgen.

Beim Ausfall eines Wiegand-Sensors sind die Werte, die von beiden Wiegand-Sensoren erzeugt werden, nicht mehr plausibel. Dadurch kann festgestellt werden, ob ein Wiegand-Sensor ausgefallen ist.

Des Weiteren kann durch weitere Systeme die Lebensdauer der Anwendung verlängert werden, wenn man auf eins oder mehrere redundante Systeme verzichten kann.

Weitere erzielbare Eigenschaften mit dem erfindungsgemäßen System sind:
a) Die Magnetfeldänderungen können vorteilhaft durch eine Membrane (Gehäusewandung) hindurch detektiert werden. Somit kann der Sensor außerhalb des zu detektierenden oder zählenden Mediums angeordnet sein. Aggressive Medien oder hohe Drücke werden durch die Membrane (Gehäusewandung) von der Sensorik abgeschirmt (auch geeignet bei Explosionsschutz)
b) Der Sensor ist an sich vollkommen verschleiß-, berührungs- und rückwirkungsfrei
c) Wie in der Zeichnung nach Figur 2 später gezeigt wird, kann bei gezielter Anordnung der Magnete ein homogenes Magnetfeld für die Wiegand Sensorik im "Innern" erzeugt werden. Durch die Anordnung der Sensorik im "Innern" kann die Sensorik gleichzeitig gegen Manipulationsversuche von "außen" abgeschirmt werden.
d) Solche Vorrichtungen eignen sich besonders für die Erfassung des Verbrauchs bei strömenden Medien (wie z. B. in Gas- und Wasserzählern).
e) Das Eichen von batterielosen Zählern, Zählgeräten, Impulszählern und Messgeräten für strömende Medien kann entfallen.

Neben der eigentlichen Funktion eines batterielosen Zählers werden folgende weitere Vorteile nach der Erfindung erzielt:
1) +Bei der Erfindung ist die Wiegand-Hall Sensoreinheit gedoppelt. Durch Vergleich der Systeme können sich diese gegenseitig kontrollieren. Wird z.B. ein System manipuliert kann dies durch das andere detektiert werden. Fällt ein System aus oder wird beschädigt, kann auch dieser Ausfall durch Vergleichen der Werte des anderen Systems erkannt werden. Durch die verdoppelte Schaltung als Oder-Verknüpfung aus zwei unabhängig arbeitenden Wiegand-Sensoren wird die Lebensdauer erhöht.
2) Durch die Anordnung der drehenden Welle mit Magneten außen und den Wiegandsensoren innen ergeben sich zwei Vorteile:
   a) ein nahezu homogenes Magnetfeld für die Wiegandsensoren im Innern (Vergleich Bild 1/3 zu Bild 2)
   b) Die Welle kann die Wiegandsensoren im Inneren gleichzeitig abschirmen bzw. evt. Störmagnete von außen auf Distanz halten - Manipulationssicherheit
3) Die vollständige Anordnung der Platinen im Inneren des z.B. Gaszählers erhöht zusätzlich die Manipulationssicherheit (Bild 1). Detektierende Elemente und Schaltungen sind weit vom zugänglichen Außenbereich des Zählers entfernt angeordnet.
4) Auch ist eine kompakte Anordnung möglich. Die Magnetpaare auf der Welle sind dazu um 90° gedreht. Somit nur zwei parallele Platinen notwendig anstatt vier oder fünf wie in einem anderen Ausführungsbeispiel.
5) Wiegand- und Hallsensoren sind so angeordnet, dass eine Drehrichtungserkennung gewährleistet ist.
6) Magnetfeldänderung durch Membran. Somit kann der Sensor außerhalb des zu detektierenden oder zählenden Mediums angeordnet sein (aggressive Medien, Drücke, explosionsfähige Gase)
7) Kein Sensor Verschleiß- da berührungsfrei
8) Da nie ein Batteriewechsel notwendig ist, entfällt ein evt. nachträgliche Eichung.
9) Auch eine Lösung mit einer Leiterplatte ist möglich.

Wesentliches Merkmal der Erfindung ist demnach, dass ein Gehäuse abdichtend in den Innenraum des strömenden Mediums hineinreicht, in welchem Gehäuse bevorzugt zwei Wiegand-Sensoren angeordnet sind, und dass im strömenden Medium lediglich die mit Permanentmagneten bewegte, bevorzugt als Hülse ausgebildete Scheibe angeordnet ist, die in Bezug zu den gehäuseseitig in das strömende Medium abdichtend eingreifenden Wiegand-Sensoren ein notwendiges magnetisches Feld erzeugt.

Das Gehäuse nimmt in seinem Innenraum die Sensorik mit den Wiegand-Sensoren auf und erstreckt sich mit seiner Längsachse etwa quer (annähernd im Winkel von 90 Grad) zur Längsachse der Rohrleitung in diese Rohrleitung hinein. Der Innenraum des Gehäuses ist daher nicht von dem Medium beaufschlagt, sondern von der die Rohrleitung umgebenden Atmosphäre. Es kann deshalb bevorzugt einseitig offen in Richtung zur Atmosphäre ausgebildet sein, um einen guten Zugang für die dort eingebaute Sensorik zu erhalten.

Unter dem Begriff "transversales Feld" wird verstanden, dass ein drehendes Magnetfeld erzeugt wird, dessen Feldlinien sich parallel zum strömenden Medium erstrecken und sich hierbei drehen, d. h. es wird ein Rotationsmagnetfeld in der Ebene der Wiegand-Drähte erzeugt, womit der Vorteil besteht, dass auf engstem Raum nicht nur ein einziger Wiegand-Sensor angeordnet werden kann, sondern zwei Wiegand-Sensoren oder sogar mehr, die alle von dem gleichen transversalen Magnetfeld mit etwa der gleichen Magnetfeldstärke durchsetzt sind, was beim Stand der Technik nicht möglich war.

Beim Stand der Technik waren der eine oder mehrere Wiegand-Sensoren vertikal übereinander (stapelweise) angeordnet, während im Mittelpunkt der vorliegenden Erfindung steht, dass die Wiegand-Sensoren mit den in dieser Ebene ausgerichteten Wiegand-Drähten von einem radial außerhalb des Gehäuses angeordneten Magnetfeld durchströmt werden.

Statt eines übereinander liegenden Aufbaus nach dem Stand der Technik sieht die Erfindung demzufolge eine vertikale, in einer Ebene liegende Anordnung der Wiegand-Sensoren vor.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Anordnung nach dem Stand der Technik
- Figur 2:: schematisiertes Blockschaltbild des Prinzips der Erfindung
- Figur 3:: einen Halbschnitt durch die das Medium führende Rohrleitung mit Darstellung eines ersten Ausführungsbeispiels der Erfindung
- Figur 4:: das Prinzipbild des magnetischen Flusses
- Figur 5:: eine zweite Ausführungsform der Erfindung
- Figur 6:: ein nicht erfindungsgemäßes Ausführungsbeispiel zur allgemeinen Erläuterung.

In Figur 1 ist nach dem Stand der Technik schematisiert dargestellt, dass eine mit Permanentmagneten besetzte Scheibe a im strömenden Medium 8 dreht und hierbei ein Magnetfeld durch die Trennwand 13 des Mediums hindurch auf eine außerhalb des Mediums angeordnete weitere drehbare Scheibe b erzeugt, die mit ein oder mehreren Permanentmagneten c besetzt ist, wobei zwischen der Scheibe a und der Scheibe b eine magnetische Drehkopplung besteht.

Durch die Drehung der Scheibe a wird über die Magnetkopplung die Scheibe b drehend mitgenommen und in der Nähe der Scheibe b ist ein Wiegand-Sensor d angeordnet, dessen Wiegand-Draht vom Permanentmagnetfeld der Permanentmagneten c beaufschlagt, so dass bei Feldrichtungsänderung ein Spannungspuls erzeugt wird.

Nachteil der bekannten Anordnung ist die Magnetkopplung durch die Trennwand 13 des strömenden Mediums 8 hindurch.

In Figur 2 ist das Grundprinzip der Erfindung dargestellt. Erfindungsgemäß taucht ein Gehäuseteil 15 mit einer Innenbuchse 12 in das strömende Medium 8 ein. In der Innenbuchse sind bevorzugt zwei im Abstand voneinander angeordnete Wiegand-Sensoren 25, 26 angeordnet, die von dem transversalen Magnetfeld - Feldlinien 29 - durchsetzt sind.

Das transversale Magnetfeld wird von mehreren gleichmäßig am Umfang verteilt angeordneten Permanentmagneten 6, 7 erzeugt, die auf einer Hülse 4 angeordnet sind, die sich beispielsweise in Pfeilrichtung 2 dreht und drehfest mit einer Antriebswelle 1 verbunden ist.

Der Antrieb der Antriebswelle 1 erfolgt über eine nicht näher dargestellte Antriebsvorrichtung, z. B. ein Turbinenrad oder dergleichen, welches direkt im strömenden Medium 8 angeordnet sein kann.

Wichtig bei der Erfindung ist, dass auf eine magnetische Kupplung nach dem Stand der Technik nach Figur 1 verzichtet werden kann, so dass ein vollkommen abgedichteter Abschluss des Gehäuseteils 15 in Bezug zum strömenden Medium 8 vorhanden ist. Im strömenden Medium befindet sich nur die drehend angetriebene Hülse 4 und nicht die gesamte Zähleinheit. Bei der US-Patentschrift war notwendig, dass die gesamte Zählereinrichtung im strömenden Medium gekapselt eingebaut ist, was bei der Erfindung vermieden wird.

Weiterer Vorteil der Erfindung ist, dass es wegen der Parallelanordnung der Feldlinien 29 in einer Ebene (parallel zur Flussrichtung des strömenden Mediums 8) es nun möglich ist, in dieser Ebene zwei oder mehr übereinander liegende Wiegand-Sensoren 25, 26 anzuordnen, die alle in gleicher Weise von den Feldlinien 29 des Rotationsmagnetfeldes durchströmt werden, weil sie im Wesentlichen in einer Ebene vertikal übereinander liegen.

In einer bevorzugten weiteren Ausgestaltung der Erfindung ist es zusätzlich vorgesehen, dass ein oder mehrere Hall-Sensoren vorgesehen sind, mit denen die Drehrichtung erkannt werden kann.

Hierbei wird bevorzugt, wenn neben dem rotierenden Magnetfeld noch ein zusätzliches Magnetfeld im gehäusefesten Teil angeordnet ist, d. h. innerhalb des Gehäuses.

In dieser Weiterbildung der Erfindung ist vorgesehen, dass eine Drehrichtungserkennung vorgesehen ist, zu der mindestens ein Wiegand-Sensor in Kombination mit einem Hall-Sensor notwendig ist.

Um die Anordnung redundant zu gestalten, sieht die Erfindung vor, dass zwei Wiegand-Sensoren vorhanden sind und jedem Wiegand-Sensor jeweils ein Hall-Sensor zugeordnet ist.

Für jeden Wiegand-Sensor und für jeden zugeordneten Hall-Sensor wird eine Messauswertung vorgenommen, so dass zwei getrennte Messauswertungen vorhanden sind. Fällt der eine Wiegand-Sensor oder ihm zugeordneter Hall-Sensor aus, wird dies erkannt, und es werden die Messergebnisse des anderen Wiegand-Sensors in Verbindung mit dem diesen zugeordneten Hall-Sensor ausgewertet.

Für einen solchen Fehlerfall kann es auch vorgesehen sein, dass der gesamte Zähler ausgetauscht wird.

Auf jeden Fall ist eine redundante Anordnung von jeweils einem Wiegand-Sensor mit einem Hall-Sensor vorhanden, um dieses System besonders betriebssicher zu gestalten.

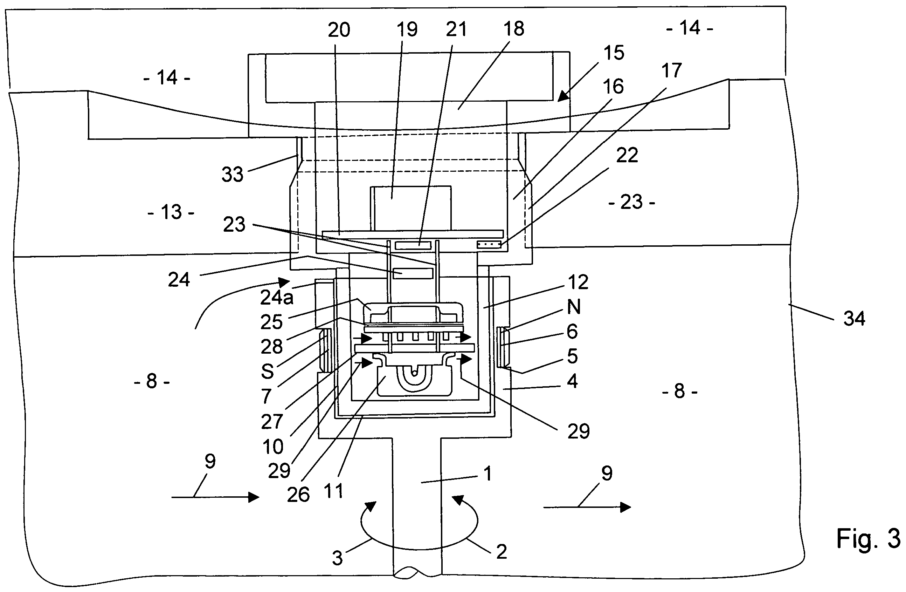

In Figur 3 ist dargestellt, dass eine Antriebswelle 1 im strömenden Medium 8 vorhanden ist, das beispielsweise in Pfeilrichtung 9 strömt. Die Antriebswelle 1 kann hierbei in Pfeilrichtung 2, aber auch in Gegenrichtung, in Pfeilrichtung 3, angetrieben sein.

Die Antriebswelle 1 ist bevorzugt werkstoffeinstückig mit einer topfförmigen Hülse 4 verbunden, an deren Außenumfang eine Anzahl von Permanentmagneten 6, 7 gleichmäßig verteilt am Umfang angeordnet sind. In einem bevorzugten Ausführungsbeispiel sind am Außenumfang zwei einander gegenüberliegend angeordnete Permanentmagnete 6, 7 angeordnet. Es können jedoch auch mehr als zwei Permanentmagnete vorgesehen sein.

Wichtig ist, dass der eine Permanentmagnet 6 mit seinem Nordpol radial nach außen zeigt, während der gegenüberliegende Permanentmagnet 7 mit seinem Südpol radial nach außen weist. Diese sind gegensätzlich gepolt. Anstatt der zwei vorhandenen Permanentmagnete 6, 7 können auch paarweise weitere Permanentmagnete angeordnet werden; d. h. zum Beispiel vier Permanentmagnete oder sechs oder acht.

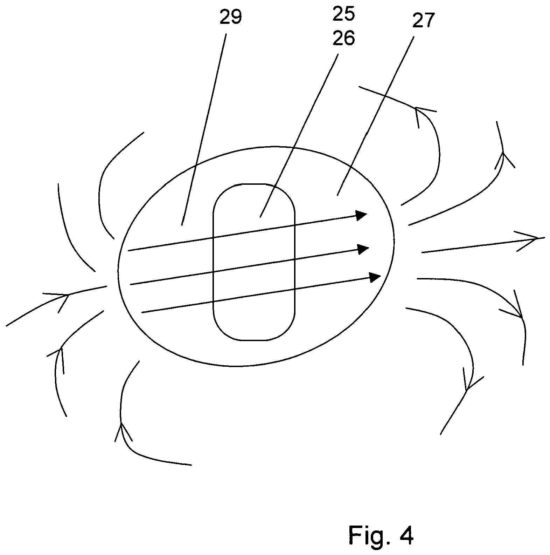

Diese Permanentmagneten 6 sind jeweils in am Umfang verteilt angeordneten Taschen 5 in der Wandung der Hülse 4 angeordnet und erzeugen ein transversales Feld, wie es mit den Feldlinien 29 in Figur 4 dargestellt ist. Dies ist auch in Figur 3 dargestellt. Dort ist erkennbar, dass das rotierende Feld, welches von der rotierenden Hülse 4 erzeugt wird, transversal das innen liegende Gehäuse 15 durchsetzt, welches den Zähler ausmacht.

Das Gehäuseteil 15 ist abgedichtet in einer Trennwand 13 eingesetzt und erstreckt sich mit einem buchsenförmigen Gehäuseteil (Innenbuchse 12) abgedichtet in das strömende Medium 8 hinein.

Der Innenraum 18 des Gehäuses ist mit der neutralen Umgebung 14 in Verbindung und muss nicht (kann aber) besonders abgedichtet sein. Dies ist ein wesentlicher Vorteil gegenüber dem Stand der Technik.

Die drehend angetriebene Hülse 4 rotiert über einen rings umlaufenden Ringspalt 10 und einen Bodenspalt 11 in Bezug zu der feststehenden Innenbuchse 12.

Stirnseitig oben an der Hülse 4 sind am Außenumfang eine Anzahl von Permanentmagneten 24, 24a drehfest angeordnet, welche die Signalgeber für die im Innenraum 18 des Gehäuses 15 angeordneten Hall-Sensoren 21, 22 ausbilden, die zur Drehrichtungserkennung herangezogen werden. Jeder Hall-Sensor 21, 22 ist unabhängig von dem anderen aufgebaut und führt eine unabhängige Auswertung aus, um die vorher benannten redundanten und unabhängig voneinander arbeitenden Systeme zu erreichen.

Ein erstes System wird beispielsweise durch den oberen Wiegand-Sensor 25 in Verbindung mit beispielsweise dem Hall-Sensor 21 erzeugt, während das zweite, unabhängig auswertende und auch unabhängig arbeitende Messsystem aus dem zweiten Wiegand-Sensor 26 in Verbindung mit dem Hall-Sensor 22 gebildet wird.

Den Messsensoren sind redundante Auswerteelektroniken zugeordnet, die hier aber nicht weiter erwähnt werden.

Die beiden Wiegand-Sensoren 25, 26 sind im Innenraum der Innenbuchse 12 durch Verbindungsstifte 23 voneinander getrennt. Es ist eine mittlere Leiterplatte 27 vorgesehen, auf der die beiden Wiegand-Sensoren 25, 26 angeordnet sind. Es ist nur beispielhaft dargestellt, dass jedem Wiegand-Sensor 25, 26 in an sich bekannter Weise ein Wieganddraht 28 zugeordnet ist, in dem die elektrische Spannung induziert wird.

Die Innenbuchse 12 setzt sich werkstoffeinstückig in Form einer Wandbuchse 16 mit vergrößertem Durchmesser nach oben fort, wobei die Wandbuchse 16 mit einem Außengewinde 17 abdichtend in einer zugeordneten Aufnahmebohrung 33 der Trennwand 13 aufgenommen ist.

In diesem Bereich ist über die Verbindungsstifte 23 eine weitere Leiterplatte 20 angeordnet, die einen Anschlussblock 19 trägt, in dem die Messelektronik und die Anschlussteile integriert sind.

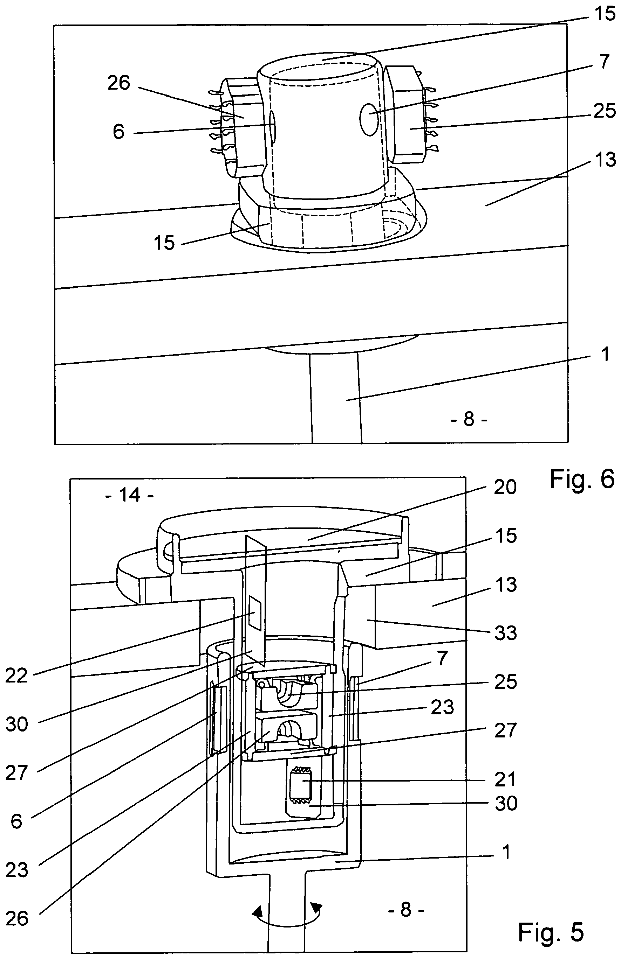

In Figur 5 ist eine weitere Ausführungsform dargestellt. Diese Ausführungsform unterscheidet sich von der Ausführungsform nach Figur 3 dadurch, dass die Bauteile unterschiedlich positioniert sind. Die Wiegand-Sensoren 25, 26 sind auf engerem Raum angeordnet und werden durch Verbindungsstifte 23 auf Abstand gehalten. Im unteren Bereich ist eine Leiterplatte 27 vorhanden, unterhalb der über eine weitere Leiterplatte 30 der eine Hall-Sensor 21 angeordnet ist, während der gegenüberliegende Hall-Sensor an einer oberen Leiterplatte 20 im Bereich einer oberen versetzt dazu vorgesehenen Leiterplatte 30 in Form des Hall-Sensors 22 angeordnet ist.

Die beiden Hall-Sensoren 21, 22 sind demnach schräg zueinander auf unterschiedlichen Höhen zueinander versetzt und arbeiten mit jeweils auf diesen Ebenen angeordneten Permanentmagneten, die jeweils drehfest in der umlaufend angetriebenen Hülse 4 angeordnet sind. Die Permanentmagnete sind der Einfachheit halber nicht dargestellt.

In dieser Ausführung sind zwar mehrere Leiterplatten vorhanden, aber aus der Darstellung nach Figur 5 ergibt sich, dass der Anteil des Gehäuses 15, der in Form der Innenbuchse 12 in das Medium 8 eintaucht, größer ist als vergleichsweise beim Ausführungsbeispiel nach Figur 3 und dass beim Ausführungsbeispiel nach Figur 5 im Außenbereich jenseits der Trennwand 13 nur noch klein bauende Gehäuseteile vorhanden sind.

Dies führt dazu, dass im Ausführungsbeispiel nach Figur 5 eine verbesserte magnetische Abschirmung des Gehäuses 15 gegeben ist, weil der gesamte Aufbau in das Medium 8 eintaucht und ein von außen angelegtes, zu Manipulationszwecken gedachtes Magnetfeld noch weniger wirksam auf den Messaufbau nach Figur 5 einwirkt.

Ein weiteres Ausführungsbeispiel ist in Figur 6 dargestellt. Dieses Ausführungsbeispiel ist nicht Teil der Erfindung sondern dient zur weiteren Erläuterung und zum leichteren Verständnis der Erfindung. Es ist jenseits der Trennwand 13 ein hoch bauender Gehäuseteil 15 vorhanden, an dessen Außenumfang die Wiegand-Sensoren 25, 26 angeordnet sind, die im vorherigen Beispiel im Innenraum des Gehäuses angeordnet sind.

Hier besteht der Unterschied, dass die Wiegand-Sensoren auch außerhalb des Gehäuses angeordnet sein können und durch die Permanentmagnete 6, 7, die in einer inneren umlaufenden Hülse innerhalb des Gehäuses 15 angeordnet sind, beeinflusst werden. Hier ist die gegensätzliche Konstruktion im Vergleich zur Figur 5 gegeben, weil der wesentliche Teil des Gehäuseaufbaus im Bereich der neutralen Umgebung 14 angeordnet ist, während nach Figur 5 der wesentliche Teil des Gehäuseaufbaus im Bereich des strömenden Mediums 8 angeordnet ist.

Bei der Ausführungsform nach Figur 6 besteht der weitere Vorteil, dass der Durchmesser des Gehäuses 15 weiter minimiert werden kann, weil die Wiegand-Sensoren radial außen sitzen und keine Notwendigkeit besteht - wie bei Figur 5 - die Wiegand-Sensoren raumgreifend im Bereich einer in das Medium eintauchenden und dort abgedichteten Innenhülse 12 einzubauen.

Gemäß Figur 6 kann eine wesentliche Minimierung der Gehäuseabmessungen im Vergleich zu dem Gehäuse nach Figur 5 vorgenommen werden.

## Patentansprüche

1. Batterieloser Zähler für strömende Medien, bei dem in der das strömende Medium (8) führenden Rohrleitung (34) ein mit Permanentmagneten (6, 7) besetzter, durch das Medium drehend angetriebener Rotorkörper (4) angeordnet ist und das hierdurch erzeugte, rotierende Magnetfeld auf einen Wiegand-Sensor (25) einwirkt, der außerhalb des strömenden Mediums im Umgebungsbereich des Zählers angeordnet ist, wobei annähernd quer zur Längsachse der Rohrleitung (34) in diese Rohrleitung (34) ein Gehäuseteil (15) abdichtend in den Innenraum der Rohrleitung (34) eingreift und vom strömenden Medium mindestens teilweise umströmt ist, dass der Außenumfang des Gehäuseteils (15) von dem drehend angetriebenen, das rotierende Magnetfeld erzeugende Rotorkörper (4) mindestens teilweise umfasst ist, und dass im Gehäuseteil (15) der Wiegand-Sensor (25) angeordnet ist, **dadurch gekennzeichnet, dass** ein zweiter Wiegand-Sensor (26) vorhanden ist, der unabhängig vom ersten Wiegand-Sensor (25) ist, wobei die beiden Wiegand-Sensoren (25, 26) parallel zur Flussrichtung des strömenden Mediums (8) übereinander liegend angeordnet sind, wobei das von den Permanentmagneten (6, 7) erzeugte, drehende Magnetfeld mit seinen Feldlinien (29) parallel zur Flussrichtung des strömenden Mediums (8) ausgerichtet ist, und das hierdurch gebildete Rotationsmagnetfeld in der Ebene der Wiegand-Sensoren (25, 26) liegt, die beide von dem gleichen transversalen Magnetfeld mit etwa der gleichen Magnetfeldstärke durchsetzt sind.

2. Batterieloser Zähler nach Anspruch 1, **dadurch gekennzeichnet, dass** ein drehrichtungserkennendes Sensorelement in Form eines oder mehrerer Hall-Sensoren (21, 22) vorhanden ist, das von den Feldlinien (29) des rotierenden Permanent-Magnetfeldes in der Ebene oder Richtung (9) des fließenden Mediums (8) durchsetzt ist.

3. Batterieloser Zähler nach Anspruch 1 oder 2, **dadurch gekennzeichnet, dass** im strömenden Medium lediglich der mit Permanentmagneten (6, 7) besetzte Rotorkörper in Form einer Hülse (4) angeordnet ist, und dass die Permanentmagneten (6, 7) in Bezug zu den gehäuseseitig in das strömende Medium (8) abdichtend eingreifenden Wiegand-Sensoren (25, 26) ein magnetisches Feld erzeugen.

4. Batterieloser Zähler nach einem der Ansprüche 1 bis 3, **dadurch gekennzeichnet, dass** die Stromimpulse derWiegand-Sensoren (25, 26) für die Stromversorgung der Schaltung des Zählers verwendet werden.

5. Batterieloser Zähler nach einem der Ansprüche 1 bis 4, **dadurch gekennzeichnet, dass** die beiden Wiegand-Sensoren (25, 26) mit zugeordneten Schaltungen verbunden sind, die einen redundanten Schaltungsaufbau ausbilden.

6. Batterieloser Zähler nach einem der Ansprüche 1 bis 5, **dadurch gekennzeichnet, dass** für jeden Wiegand-Sensor (25, 26) und für jeden zugeordneten Hall-Sensor (21, 22) eine Messauswertung vorgenommen, so dass zwei getrennte Messauswertungen vorhanden sind, die miteinander verglichen werden.

7. Batterieloser Zähler nach einem der Ansprüche 1 bis 6, **dadurch gekennzeichnet, dass** die im strömenden Medium (8) angeordnete Antriebswelle (1) mit der topfförmigen Hülse (4) verbunden ist, an deren Außenumfang eine Anzahl von Permanentmagneten (6, 7) gleichmäßig verteilt am Umfang angeordnet sind.

8. Batterieloser Zähler nach Anspruch 7, **dadurch gekennzeichnet, dass** die Permanent-Magneten (6, 7) gegensätzlich gepolt sind, wobei der eine Permanentmagnet (6) mit seinem Nordpol radial nach außen zeigt, während der gegenüberliegende Permanentmagnet (7) mit seinem Südpol radial nach außen weist.

## Claims

1. Battery-free meter for flowing media, in which a rotor body (4) fitted with permanent magnets (6, 7) and driven in rotating manner by the medium is arranged in the pipeline (34) conveying the flowing medium (8) and the thus generated rotating magnetic field acts on a Wiegand sensor (25) which is arranged outside of the flowing medium in the region surrounding the meter, wherein approximately transversely to the longitudinal axis of the pipeline (34), in this pipeline (34) a housing part (15) engages in sealing manner into the interior of the pipeline (34) and is at least partly flowed around by the flowing medium, that the outer circumference of the housing part (15) is at least partly surrounded by the rotor body (4) driven in rotating manner and generating the rotating magnetic field, and that the Wiegand sensor (25) is arranged in the housing part (15), **characterised in that** a second Wiegand sensor (26) is present which is independent of the first Wiegand sensor (25), wherein the two Wiegand sensors (25, 26) are arranged parallel to the flow direction of the flowing medium (8) and lying one above another, wherein the rotating magnetic field generated by the permanent magnets (6, 7) is aligned with its flux lines (29) parallel to the flow direction of the flowing medium (8), and the rotating magnetic field thus formed lies in the plane of the Wiegand sensors (25, 26) which are both passed through by the same transversal magnetic field with approximately the same magnetic field strength.

2. Battery-free meter according to claim 1, **characterised in that** a sensor element which detects direction of rotation is present in the form of one or more Hall sensors (21, 22) and is passed through by the flux lines (29) of the rotating permanent magnetic field in the plane or direction (9) of the flowing medium (8).

3. Battery-free meter according to claim 1 or 2, **characterised in that** only the rotor body fitted with permanent magnets (6, 7) in the form of a sleeve (4) is arranged in the flowing medium, and **in that** the permanent magnets (6, 7) generate a magnetic field with reference to the Wiegand sensors (25, 26) engaging in sealing manner into the flowing medium (8) on the housing side.

4. Battery-free meter according to one of claims 1 to 3, **characterised in that** the current pulses of the Wiegand sensors (25, 26) are used for the current supply of the circuit of the meter.

5. Battery-free meter according to one of claims 1 to 4, **characterised in that** the two Wiegand sensors (25, 26) are connected to assigned circuits which form a redundant circuit arrangement.

6. Battery-free meter according to one of claims 1 to 5, **characterised in that** for each Wiegand sensor (25, 26) and for each assigned Hall sensor (21, 22), a measurement evaluation is carried out so that two separate measurement evaluations are present which are compared with one another.

7. Battery-free meter according to one of claims 1 to 6, **characterised in that** the drive shaft (1) arranged in the flowing medium (8) is connected to the pot-like sleeve (4), on the outer circumference of which a number of permanent magnets (6, 7) are arranged uniformly distributed on the circumference.

8. Battery-free meter according to claim 7, **characterised in that** the permanent magnets (6, 7) have opposite poles, wherein the one permanent magnet (6) points radially outwards with its north pole, whereas the opposite permanent magnet (7) points radially outwards with its south pole.

## Revendications

1. Compteur sans batterie pour des milieux en écoulement, dans lequel un corps de rotor (4) équipé d'aimants permanents (6, 7) entraîné en rotation par le milieu est disposé dans le conduit tubulaire (34) acheminant le milieu (8) en écoulement et le champ magnétique rotatif ainsi généré agit sur un capteur Wiegand (25), qui est disposé à l'extérieur du milieu en écoulement dans la zone environnante du compteur, dans lequel une partie de boîtier (15) vient en prise de manière étanche avec l'espace intérieur du conduit tubulaire (34) dans ledit conduit tubulaire (34) approximativement transversalement par rapport à l'axe longitudinal du conduit tubulaire (34) et est entourée au moins en partie du milieu en écoulement, que la périphérie extérieure de la partie de boîtier (15) est comprise au moins en partie par le corps de rotor (4) entraîné en rotation générant le champ magnétique rotatif, et que le capteur Wiegand (25) est disposé dans la partie de boîtier (15), **caractérisé en ce qu'**un deuxième capteur Wiegand (26) est présent, qui est indépendant du premier capteur Wiegand (25), dans lequel les deux capteurs Wiegand (25, 26) sont disposés de manière superposée parallèlement à la direction de flux du milieu (8) en écoulement, dans lequel le champ magnétique rotatif généré par les aimants permanents (6, 7) est orienté avec ses lignes de champ (29) parallèlement à la direction de flux du milieu (8) en écoulement, et le champ magnétique rotatif ainsi formé se situe dans le plan des capteurs Wiegand (25, 26), qui, tous deux, sont traversés par le même champ magnétique transversal avec à peu près la même intensité de champ magnétique.

2. Compteur sans batterie selon la revendication 1, **caractérisé en ce qu'**un élément de capteur d'identification de direction de rotation est présent sous la forme d'un ou de plusieurs capteurs à effet Hall (21, 22), lequel est traversé par les lignes de champ (29) du champ magnétique permanent rotatif dans le plan ou la direction (9) du milieu (8) en écoulement.

3. Compteur sans batterie selon la revendication 1 ou 2, **caractérisé en ce que** seulement le corps de rotor équipé d'aimants permanents (6, 7) est disposé sous la forme d'une douille (4) dans le milieu en écoulement, et que les aimants permanents (6, 7) génèrent un champ magnétique par rapport aux capteurs Wiegand (25, 26) venant en prise de manière étanche côté boîtier avec le milieu (8) en écoulement.

4. Compteur sans batterie selon l'une des revendications 1 à 3, **caractérisé en ce que** les impulsions de courant des capteurs Wiegand (25, 26) sont utilisées pour l'alimentation en courant du circuit du compteur.

5. Compteur sans batterie selon l'une des revendications 1 à 4, **caractérisé en ce que** les deux capteurs Wiegand (25, 26) sont reliés à des circuits associés, qui réalisent une structure de circuit redondante.

6. Compteur sans batterie selon l'une des revendications 1 à 5, **caractérisé en ce que** pour chaque capteur Wiegand (25, 26) et pour chaque capteur à effet Hall (21, 22) associé, une évaluation de mesure est effectuée de sorte que deux évaluations de mesure séparées soient présentes, qui sont comparées l'une à l'autre.

7. Compteur sans batterie selon l'une des revendications 1 à 6, **caractérisé en ce que** l'arbre d'entraînement (1) disposé dans le milieu (8) en écoulement est relié à la douille (4) en forme de pot, au niveau de la périphérie extérieure de laquelle un nombre d'aimants permanents (6, 7) sont disposés de manière répartie uniformément au niveau de la périphérie.

8. Compteur sans batterie selon la revendication 7, **caractérisé en ce que** les aimants permanents (6, 7) présentent une polarité opposée, dans lequel un aimant permanent (6) pointe avec son pôle nord radialement vers l'extérieur alors que l'aimant permanent (7) opposé pointe avec son pôle sud vers l'extérieur radialement.
